# EUROPEAN PATENT APPLICATION

(11) **EP 4 001 636 A1**
(43) Date of publication of application: **25.05.2022**
(21) Application number: 20208664.1
(22) Date of filing: 19.11.2020
(51) Int. Cl.: F03D 7/02, B63B 35/44

(54) **CONTROLLING AN OFFSHORE WIND TURBINE USING ACTIVE ADD-ONS**

(71) Applicant: Siemens Gamesa Renewable Energy A/S, 7330 Brande (DK)
(72) Inventor: Masciola, Marco, Louisville, CO 80027 (US); Guntur, Srinivas, Boulder, CO 80303 (US); Laugesen, Kasper, 6700 Esbjerg (DK)
(74) Representative: Aspacher, Karl-Georg

(57) **Abstract**

It is described a method of controlling an offshore wind turbine (50) installed on a floating platform (12) and having at least one rotor blade (6) comprising at least one adaptable flow regulating device (9) configured to adapt/modulate an air flow exposed profile, the method comprising: receiving a load related signal (3, 14) indicative of a load due to a movement of the floating platform (12); and controlling the adaptable flow regulating device (9) based on the load related signal (3, 14).

## Description

### Field of invention

The present invention relates to a method and a corresponding arrangement of controlling an offshore wind turbine installed at a floating platform and having at least one rotor blade comprising at least one adaptable flow-regulating device. Furthermore, the present invention relates to an offshore wind turbine system comprising the arrangement.

### Art Background

Due to better wind conditions many wind turbines are conventionally arranged offshore on floating platforms. Those floating offshore wind turbines (FOWT) may introduce many new design challenges not encountered with fixed bottom wind turbines. The primary reason for this challenge is that floating wind turbines are mounted on top of a compliant foundation and existing controller methodologies and/or turbine hardware are not necessarily designed to count for these motions.

FOWTs are subjected to excessive translational and rotational movement caused by the surrounding environment, including sea waves and wind. These motions may originate at the floating substructure transfer up to the wind turbine tower and up to the wind turbine nacelle. These motions may introduce additional accelerations on the wind turbine components. Thereby, ocean waves may be the primary excitation source, but other influencing factors may exist like wind. Those kinds of motions may lead to undesirable increases in turbine component loads.

Conventionally, excessive loads may be mitigated through controller technology. However, it may sometimes require an overactive blade pitch system. Thereby, extra burden and load is placed onto the blade pitch bearings and/or blade pitch actuators. Pitch bearing damage is consistently a design constraint for both onshore and offshore (fixed bottom) wind turbines. Therefore, pitch bearing damage may be still higher for FOWTs when the offshore-related motions are also counteracted using the blade pitch system. The designer of a FOWT is therefore presented with the common paradox:
- Design a blade pitch system to handle more activity (higher pitch bearing fatigue damage scenario)
- design the wind turbine components to withstand higher loads and a less active pitch system (lower pitch bearing fatigue damage scenario).

It is unknown at wind turbine concept inception how much additional blade pitch reserve capability is required for the blade pitch system.

Conventionally, blade pitch control has been employed to improve FOWT performance, whether it is for increasing energy power output or load mitigation.

US 2014/0196654 A1 provides a floating platform using ballasting to alter the system mass distribution to apply a moment opposing the aerodynamic force.

US 8,487,464 B3 discloses a wind turbine, wherein the rotor speed is utilized to regulate the onset of negative damping in the FOWT heel degree of freedom. Thereby, negative damping can develop between the blade pitch actuators and the floating platform fore-aft rotational motions thereby creating excessive oscillations. System loads are decreased by deploying aerodynamic damping to attenuate the oscillations. As an input parameter for the blade pitch controller, a filtered nacelle speed is utilized.

US 2015/0354532 A1 discloses to extend the capabilities and mitigate undesirable motions in the yaw platform yaw direction. Thereby blade pitch control is employed. This document discloses a motion controller for a floating wind turbine with a plurality of rotor blades, wherein the controller is arranged to adjust the blade pitch of each rotor blade so as to create a net force to control a motion of the floating wind turbine in a yaw direction.

It has been observed that conventional methods for mitigating loads or damping oscillations of an offshore wind turbine are not in all situations or circumstances effective in damping or mitigating loads or oscillations and/or require excessive actuations of a blade pitch system, thereby leading to excessive loads on components of the pitching system, and in particular pitch bearings.

Thus, there may be a need for a method and a corresponding arrangement of controlling an offshore wind turbine installed at a floating platform which may mitigate or reduce at least one of the above identified problems. In particular, a method and a corresponding arrangement are desired, wherein blade pitch bearing loads or damage can be mitigated or even avoided, while a reliable operation of the offshore wind turbine may be ensured.

### Summary of the Invention

According to an embodiment of the present invention, it is provided a method of controlling an offshore wind turbine installed on a floating platform and having at least one rotor blade comprising at least one adaptable flow regulating device configured to adapt/modulate an air flow exposed profile, the method comprising receiving a load related signal indicative of a load due to a movement, or a movement of the floating platform; and controlling the adaptable flow regulating device based on the load related signal.

The method may be implemented in software and/or hardware and may be performed for example by a wind turbine controller. The floating platform may be connected via plural mooring lines to a sea ground. The floating platform may float on the surface of the sea. The offshore wind turbine may be installed on a foundation which is attached to the floating platform.

All rotor blades of the wind turbine may each comprise one or more adaptable flow-regulating devices. The adaptable flow-regulating device may be considered to be a device which is capable of adapting/modulating/modifying the airflow exposed profile, thereby modulating airflow/pressure across the rotor blade. The airflow may be adapted or modified or modulated at one or more specific or particular regions of the profile of the rotor blade. The adaptable flow-regulating device is different from a blade pitching system. A blade pitching system does not change the airflow exposed profile, but merely changes a wind angle of attack. The airflow exposed profile may for example be changed by the adaptable flow-regulating device by changing orientation and/or position of at least one airflow exposed surface portion comprised in the adaptable flow-regulating device. Examples of flow-regulating devices will be described in detail below.

The load-related signal may be an optical/electrical or radio signal. The load may in particular represent a mechanical load which may be for example represented by a moment and/or a displacement and/or a velocity and/or an acceleration or the like.

The movement of the floating platform may for example be caused by one or more sea waves or wind. The movement may be a periodic or oscillatory movement. Due to the movement of the floating platform one or more components of the wind turbine will be accelerated, thereby leading to a load on these components. A load may for example be generated between rigidly connected components or may also be generated in moving components, such as bearings. According to embodiments of the present invention, the adaptable flow-regulating device is controlled such as to counteract or dampen at least one load which is due to the movement of the floating platform. By controlling the adaptable flow-regulating device, the pressure distribution of the airflow across the rotor blade may be selectively modulated or modified. Thereby, in particular employing a blade pitching system may be decreased or even avoided. Thereby, loads on pitch bearings may be decreased, prolonging the lifetime of the blade pitch bearings.

Embodiments of the present invention may be employed at any floating structure. In particular, the adaptable flow-regulating device (also referred to as active add-on) may be employed separately or in combination with the existing blade pitch system. The active add-on may be controlled to respond quickly to fluctuations in wind speed and/or sea waves and may provide essential aerodynamic damping, needed to not over-excite the system. Thereby, an existing blade pitch controller (if present) may define a mean operation point. The aerodynamic add-on control may create deviations about this mean operation defined by the blade pitch controller. In other embodiments, the active or the adaptable flow-regulating device may exclusively be controlled or utilized or employed to mitigate or dampen loads which are caused by motion of the offshore platform.

Embodiments of the present invention provide blade pitch control and add-on control selectively, to decrease loads on certain blade sections, in order to increase the annual energy production, diminish burden in the blade pitch system and tune the wind turbine for a given floater design without exceeding blade pitch system capacity. Thereby, controlling the adaptable flow-regulating device may be employed to constitute a partial replacement of the actuations in the blade pitch system.

According to embodiments of the present invention, controlling the adaptable flow-regulating device may provide at least one of the following:
- Flexibility needed for a wind turbine controller to accommodate any floater design to benefit the entire FOWT system
- ability for the controller to respond quickly to changing conditions
- ability for the controller to provide an aerodynamic damping to mitigate loads.

Furthermore, embodiments of the present invention may also support varying platform geometry and mass properties and distributions depending on the platform design origin. For addressing these challenges, a flexible and rapidly adaptable flow-regulating device is controlled according to embodiments of the present invention.

Embodiments of the present invention enable to use the blade pitch system less frequent but rely on a different mechanism to change the pressure distribution along the rotor blade. Furthermore, embodiments of the present invention provide an alternative mechanism to using the blade pitch system in order to alter the damping properties of the FOWT system. The alternative mechanism may be faster than the traditional blade pitch control. The alternative mechanisms may be activated collectively or individually between blades.

Embodiments of the present invention provide a new control approach to regulate the rotor speed and aerodynamic torque in order to strike a balance between the annual energy production and system loads in a FOWT. Furthermore, burden on the FOWT blade pitching bearing may be alleviated.

Embodiments of the present invention utilize a combination of control of active add-on and traditional blade pitch control to be applied to any floating foundation concept.

In the context of the present application an active add-on (also referred to as adaptable flow-regulating device) may constitute any device leading to changes in pressure distribution by altering the air foil shape without varying the angle of attack or inflow wind speed. Thus, the adaptable flow-regulating device is different from the blade pitching system.

According to an embodiment of the present invention, the load related signal comprises information regarding at least one of: a translational and/or rotational velocity of the floating platform and/or the nacelle of the wind turbine and/or the rotor of the wind turbine, in particular 6-DOF information; a translational and/or rotational acceleration of the floating platform and/or the nacelle and/or the rotor of the wind turbine, in particular 6-DOF information; a load on at least one mooring line connecting the floating platform to the sea ground; an interface moment between the wind turbine tower and a base foundation at the floating platform; at least one load experienced on any component of the floating platform and/or of the wind turbine.

The velocity and/or acceleration of the different components may for example be measured by one or more sensors, including strain sensors and/or acceleration sensors. The moment may also be measured by a strain sensor for example. Plural components of the wind turbine may comprise sensors installed to measure one or more mechanical loads acting on the respective component. Those sensor signals may be utilized for providing the load-related signal. Thereby, there is flexibility to utilize conventionally available load values for implementing the method.

According to an embodiment of the present invention, the method further comprises filtering the received load related signal, in particular using a first band-pass filter, in order to obtain a filtered load related signal, wherein controlling the adaptable flow regulating device is based on the filtered load related signal.

When the load-related signal is filtered, this filtered signal may be utilized to effectively dampen particular oscillation frequencies. In particular, sea wave-excited motions and/or wind-excited motions of the offshore platform may effectively be damped. Thereby, components of the wind turbine may be protected from damage effectively. Furthermore, oscillations not due to motions of the offshore platform may be disregarded. Those oscillations which may be due to the mere operational behaviour of the wind turbine may be handled by other control means, such as blade pitch control system for example. First order wave-induced motions may range in a frequency interval for example between 0.04 and 0.25 Hz. This range is known as the wave-band frequency range. Oscillations of those frequencies may be effectively damped by methods according to embodiments of the present invention. This technology may also dampen second order wave-induced excitations that exist at frequencies outside the wave-band range frequency. This would encompass the second order wave excitations that normally exist below 0.04 Hz and above 0.25 Hz. Other embodiments provide also damping of oscillations in for example a frequency range between 0.01 and 0.5 Hz. Other wavelength range or frequency ranges may effectively be damped, too.

According to an embodiment of the present invention, controlling the adaptable flow regulating device is performed using a first controller, in particular PID controller, receiving the filtered load related signal and outputting a flow regulating device control signal to an actuator.

The first controller may be adapted to output a flow-regulating device control signal for causing the actuator of the flow-regulating device to change position and/or orientation of one surface portion which will modulate the airflow across the rotor blade. Thereby, the flow-regulating device control signal may be derived by the first controller such as to cause decreasing the amplitude of oscillations and thereby also decreasing the load on components of the wind turbine.

Thereby, conventional controller technology and controller tuning may be utilized. The PID-controller may comprise a proportional control member, an integrative control member and a derivative control member whose output may be summed at the output of the first controller.

According to an embodiment of the present invention, the adaptable flow regulating device comprises plural adaptable flow regulating device portions affecting different regions of the rotor blade, the adaptable flow regulating device portions in particular being arranged at different positions along a longitudinal axis of the rotor blade, and controlling the adaptable flow regulating device based on the load related signal comprises controlling at least one adaptable flow regulating device portion independently from other adaptable flow regulating device portions based on the load related signal.

When the adaptable flow-regulating device comprises plural adaptable flow-regulating device portions, different areas of the rotor blade may be modulated regarding the respective airflow in different and in particular independent manner. Thereby, flexibility of control may be enhanced. In particular, the pressure profile of the airflow flowing across the rotor blade may selectively be adjusted. Thereby, the method may be improved. This embodiment may for example be employed when the adaptable flow-regulating device comprises a segmented spoiler for example.

It should be understood that the rotor blade may comprise more than one adaptable flow-regulating device and it may also comprise different types of flow-regulating devices. For each type of the flow-regulating device a respective controller may be provided. All flow-regulating devices may controlled independently from each other.

According to an embodiment of the present invention, controlling the adaptable flow regulating device is such as to achieve at least one of: aerodynamic damping and/or counteracting of at least one acceleration and/or oscillation and/or rolling motion of the platform and/or the nacelle; mitigating at least one load; mitigating floating platform fore-aft and/or side-side rotational and/or translational acceleration; selectively decreasing load on certain blade sections; changing pressure distribution around and/or across the airfoil of the rotor blade; a damping response to fluctuations in absolute wind speed; a damping response to flections in the relative wind speed due to the platform and/or nacelle response; a damping response to sea wave motion.

Thereby any load originating from an offshore platform motion may be mitigated or damped. According to embodiments of the present invention, not only the adaptable flow-regulating device is controlled for such purposes but also the blade pitch system is employed, however without exceeding the capability of the blade pitch system. Whenever possible, to damp a particular oscillation using control of the adaptable flow-regulating device alone, the pitch angle of the blade may not be modulated.

According to an embodiment of the present invention, the rotor blade is adjustable regarding a pitch angle using a pitching system, the method further comprising receiving a wind turbine operation related signal; and controlling the pitching system based on the wind turbine operation related signal.

The rotor blade pitching system may primarily be utilized to control rotational speed of the wind turbine and/or to control the power output of the wind turbine. Primarily, however the pitching system may not be employed for damping or mitigating loads which are due to motions of the offshore platform. In other embodiments however, also the pitching system may be employed for mitigating such platform motion caused loads. The pitching system may conventionally be available.

According to an embodiment of the present invention, the method further comprises controlling the adaptable flow regulating device further based on the wind turbine operation related signal, at least based on information regarding rotor speed and/or wind speed in particular, so as to avoid exceeding a pitch system capability.

According to this embodiment, the adaptable flow-regulating device may, additionally or alternatively to the blade pitch system also employed for controlling or regulating the rotational speed and/or the power of the wind turbine. Thus, the adaptable flow-regulating device may not only respond or react to loads which are due to platform motion but may also respond or react to for example changes in wind turbine operation related parameters. Thereby, the method may further be improved.

According to an embodiment of the present invention, the wind turbine operation related signal is indicative of at least one of: a rotational speed of the rotor at which the rotor blade is mounted; a blade pitch angle; a wind speed; a tower-foundation moment; a blade root moment; translational and/or rotational velocity of the wind turbine and/or the nacelle and/or the rotor, in particular 6-DOF information; translational and/or rotational acceleration of the wind turbine and/or the nacelle and/or the rotor, in particular 6-DOF information.

Thereby, conventionally available wind turbine operation related parameters may be utilized for defining the control of the adaptable flow-regulating device and/or the pitching system. Thereby, accurate rotational speed control and/or power control may be achieved.

According to an embodiment of the present invention, the method further comprises filtering the received wind turbine operation related signal, in particular using a second band-pass filter, in order to obtain a filtered wind turbine operation related signal, wherein controlling the pitch system is based on the filtered wind turbine operation related signal.

When the pitch system receives as input the filtered wind turbine operation related signal, it may selectively respond or react to disturbances or oscillations of particular frequency ranges. Thereby, excessive actuations of the pitching system may be avoided, thereby reducing pitch bearing damage.

According to an embodiment of the present invention, controlling the pitch system is performed using a second controller, in particular PID controller, receiving the filtered wind turbine operation related signal and outputting a pitch system control signal.

Thereby, conventional pitch control systems may be supported. The first controller as well as the second controller may be present in combination, thereby enabling controlling the adaptable flow-regulating device as well as the blade pitching system in an independent manner.

According to an embodiment of the present invention, the adaptable flow regulating device comprises at least one of: at least one (e.g. airflow exposed) surface member changeable in position and/or orientation relative to a main airfoil of the rotor blade, in particular configured to retract or extend a leading edge and/or a trailing edge; an adaptable spoiler, in particular having plural spoiler portions arranged at a suction surface of the rotor blade, in particular close to or at a trailing edge of the rotor blade; an adaptable flap installed close to or at a blade tip end; an airfoil morphing system; an aileron;

Thereby, conventionally available devices for modulating an airflow exposed surface of the rotor blade may be supported. The rotor blade may comprise a combination of different types of flow-regulating devices.

According to an embodiment of the present invention, the adaptable flow regulating device comprises at least one of: an inflatable bag configured to change position and/or orientation of a surface member upon inflation or deflation; and a pneumatic system arranged to selectively inflate or deflate the bag. Thereby, conventionally available methodologies for adapting the flow-regulating device may be supported.

It should be understood that the features, individually or in any combination, disclosed, explained, provided or applied to a method for controlling an offshore wind turbine installed at a floating platform may also, individually or in any combination, be applicable or be applied to an arrangement for controlling an offshore wind turbine installed at a floating platform according to embodiments of the present invention and vice versa.

According to an embodiment of the present invention, it is provided an arrangement for controlling an offshore wind turbine installed at a floating platform and having at least one rotor blade comprising at least one adaptable flow regulating device configured to adapt/modulate an air flow exposed profile, the arrangement comprising a controller adapted: to receive a load related signal indicative of a load due to a movement of the floating platform; and to control the adaptable flow regulating device based on the load related signal.

The arrangement may be configured to carry out or control a method of controlling an offshore wind turbine installed at a floating platform. The arrangement may for example be a software portion and/or hardware portion of a wind turbine controller.

According to an embodiment it is provided an offshore wind turbine system, comprising: an offshore floating platform; a wind turbine installed at the offshore floating platform and having at least one rotor blade comprising at least one adaptable flow regulating device configured to adapt/modulate an air flow exposed profile; and an arrangement according to the preceding claim communicatively coupled to the flow regulating device.

### Brief Description of the Drawings

Fig. 1 schematically illustrates an arrangement for controlling an offshore wind turbine according to an embodiment of the present invention;
Fig. 2 schematically illustrates a rotor blade which may be comprised in an offshore wind turbine system according to an embodiment of the present invention; and
Fig. 3 schematically illustrates an offshore wind turbine system according to an embodiment of the present invention.

### Detailed Description

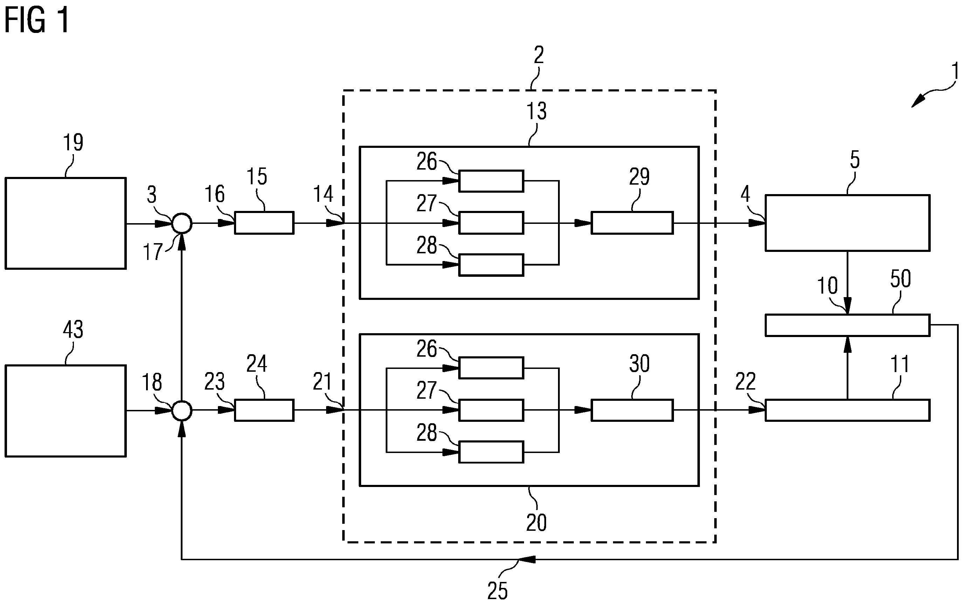

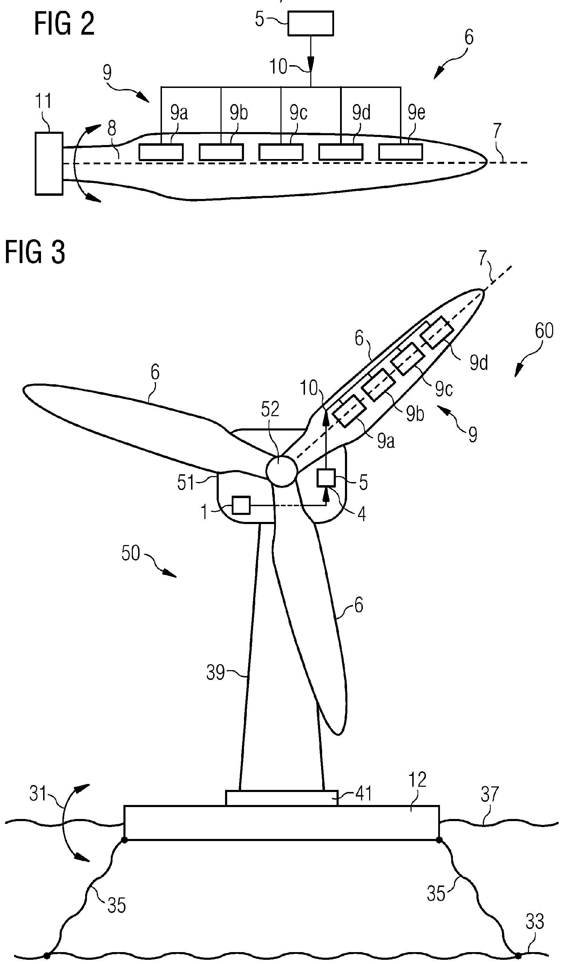

The arrangement 1 for controlling an offshore wind turbine installed at a floating platform (an example is illustrated in Fig. 3 described below) schematically illustrated in **Fig. 1** comprises a controller 2 which is adapted to receive a load-related signal 3 indicative of a load due to a movement of the floating platform. The controller 2 is further configured to control an adaptable flow-regulating device which is present at a rotor blade, based on the load-related signal 3. Therefore, the arrangement 1 outputs the flow-regulating device control signal 4 to an actuator system 5 which is configured to modify or modulate an airflow exposed profile of the rotor blade.

**Fig. 2** schematically illustrates a rotor blade 6 which may be comprised in an offshore wind turbine as controlled according to embodiments of the present invention. The rotor blade 6 illustrated in Fig. 2 is illustrated in a side-view having its longitudinal axis 7 oriented horizontally. The rotor blade 6 comprises an outer surface 8 which is airflow exposed during normal operation. The rotor blade 6 comprises an adaptable flow-regulating device 9 comprising plural adaptable flow-regulating device portions 9a, 9b, 9c, 9d, 9e. The adaptable flow-regulating device portions 9a, 9b, 9c, 9d, 9e are arranged along the longitudinal axis 7 of the rotor blade 6. The adaptable flow-regulating device 9 may for example be configured as an adaptable segmented spoiler, wherein the adaptable flow-regulating device portions 9a, ..., 9e are attached to a suction surface 8 of the rotor blade. The rotor blade 6 may comprise one or more other types of flow-regulating devices.

The actuator system 5 controlled by the controller 2 outputs drive signals 10 or actuating influence (such as hydraulic action) to the adaptable flow-regulating device portions 9a, ... 9e, as is schematically illustrated in Fig. 2. Thereby, the individual flow-regulating device portions 9a, ... 9e may independently be controlled by control or drive signals or actuating influence 10. The flow-regulating device portions 9a, ... 9e each comprise at least one surface member exposed to an airflow during normal operation of the wind turbine 50.

The rotor blade 6 further comprises a pitch actuator 11 which is configured to rotate the rotor blade 7 around its longitudinal axis 7. Thereby, the pitch angle of the rotor blade 6 may be adjusted.

**Fig. 3** schematically illustrates an offshore wind turbine system 60 according to an embodiment of the present invention, comprising an offshore floating platform 12 and further comprising a wind turbine 50 installed at the offshore floating platform 12. The wind turbine 50 has a rotor 52 (harboured in nacelle 51) at least one rotor blade 6 comprising at least one adaptable flow-regulating device 9, such as an adaptable flow-regulating device 9, as is illustrated in Fig. 1. The wind turbine 50 or the offshore wind turbine system 60 further comprises an arrangement 1 for controlling the offshore wind turbine 50 having the at least one rotor blade 6 which comprises at least one adaptable flow-regulating device 9. Symbolized by the arrow 10 the actuator 5 actuates the different portions of the adaptable flow-regulating device 9. The platform 12 is floating on sea surface 37 and is connected to a sea ground 33 using mooring lines 35. Due to wave motion or wind, the offshore platform 12 undergoes motions as represented by the arrow 31. Those kind of motions may lead to loads on components of the wind turbine which may be damped or mitigated by appropriately controlling the adaptable flow-regulating device 9.

The controller 2 of the arrangement 1 illustrated in Fig. 1 comprises a first controller 13 which is provided for controlling the adaptable flow-regulating device, for example illustrated in Figs. 2 and 3. The first controller 13 may also be referred to as active add-on controller. The first controller 13 receives a filtered load-related signal 14 which is obtained by a first bandpass filter 15. The filtered load-related signal 14 evolves by filtering the filter input signal 16 by the first filter 15. The filter 15 may be a band-pass filter, damping or attenuating frequencies of oscillations which are not intended to be damped or reduced by the add-on controller 13.

The input signal 16 may correspond or may be equal to the load-related signal 3 or may be the sum of the load-related signal 3 and a further signal 17 which may relate to wind turbine operation related signal 18. The load-related signal 3 is obtained from measurement or estimation block 19 providing for example information regarding 6-DOF platform velocity and/or acceleration and/or mooring line loads and/or interface moment between the tower 39 and a foundation 41 at the platform 12.

The wind turbine operation related signal 18 may comprise information regarding rotational speed of a rotor of the wind turbine and/or blade pitch angle and/or wind speed and/or tower-bottom moment and/or blade-root moment and/or 6-DOF rotor-nacelle arrangement velocity and/or accelerations, as obtained, measured or estimated in block 43.

The controller 2 comprises beside the first controller 13 a second controller 20 which receives a filtered wind turbine operation related signal 21 and outputs a pitch system control signal 22. The second controller 20 is also referred to as pitch controller. The filtered wind turbine operation related signal 21 is obtained by filtering a filter input signal 23 by a second filter 24 which may be a bandpass filter. The second filter 24 may attenuate or reduce oscillations in one or more particular frequency ranges, for example frequency ranges related to movements of the offshore platform due to sea waves or wind. The filter input signal 23 for the second filter 24 may correspond or may be equal to the wind turbine operation related signal 18 or may for example be a sum of the wind turbine operation related signal 18 and further operational parameters 25 as received from the wind turbine 50.

Input (23) are a set of conventional input signals to a conventional pitch controller, like a PID controller or any generic pitch controller, not restricted to PID controller. Inputs (16) comprise of the conventional inputs (17) as well as the floater inputs (3), which are to be used by the Active-addon controller (current invention).
The pitch system control signal 22 is supplied to the pitch actuator 11 illustrated in Figs. 1 and 2. The pitch actuator is then configured to rotate the rotor blade 6 around its longitudinal axis 7 in order to adjust a particular pitch angle.

The first controller 13 as well as the second controller 20 are configured as PID controllers. The first controller as well as the second controller comprises a proportional member 26, an integrative member 27 as well as a derivative member 28 which are connected in parallel. All of them receive the filtered input signal 14, 21, respectively. The control outputs of the proportional member 26, the integrative member 27 and the derivative member 28 are summed and provided at a controller module 29 and 30, respectively for the first controller 13 and the second controller 20, respectively.

Controller 30 is a wind turbine pitch controller without addons. Controller 29's purpose is to target the actuation of the active add-ons on the blades based on the traditional (17) as well as the floater (3) inputs. The output of this controller (4) then determines the actuation levels of the add-ons (5).

The output of the controller module 29 of the first controller 13 represents the adaptable flow device control signal 4. The output of the controller portion 30 of the second controller 20 represents the pitch system control signal 22.

The actuator 5 may comprise a not in detail illustrated inflatable bag and/or a pneumatic system for changing the shape or inflation degree of the inflatable bag.

The term "active add-on" or "adaptable flow-regulating device" may signify any device mounted on a wind turbine rotor blade which may be configured to actively response to an input signal and change the pressure distribution around the airfoil of the rotor blade. This pressure distribution change may take effect without altering the blade pitch angle or inflow wind velocity. The active add-on may include at least one of the following:
- Airfoil morphing technology
- ailerons
- control surfaces, such as lifting tabs
- surfaces to retract/extend leading edge or trailing edge
- inflatable membranes.

According to embodiments of the present invention, the following control concepts are provided:
The pitch controller 20 illustrated in Fig. 1 may represent a conventional blade pitch controller. The blade pitch controller 20 may apply a collective control or an individual control of the rotor blades regarding blade pitch angle. Fig. 1 thereby, illustrates how the conventionally known blade pitch controller 20 may be integrated with the active add-on controller 13. The input signals for the pitch controller 20 comprise commonly used inputs, like rotor speed, blade pitch angle, wind speed (estimates or measured) and component loads (estimates or measurement values). These control or load signals or wind turbine operation related signals may be fed through the second filter 24 after which the signal derivatives or integral are computed. The control portion 30 may therefrom derive the actual blade pitch angle.

The platform and nacelle kinematics and platform loads are used as input to the first controller 13, i.e. the active add-on controller. Thus, the add-on controller 13 may respond to both, platform and wind turbine kinematics/loads. The first filter 15 may ensure that the PID active add-on controller responds to appropriate frequency bandwidths. These signals are fed into the control block 13 and the add-on actuators 5 then respond to these signals, namely the output signal 4 of the first controller 13.

The active add-ons 9a, 9b, ..., 9e illustrated in Fig. 2 are arranged at the airfoil of the rotor blade 6. Each adaptable flow device portion 9a, 9b, ..., 9e may have its own controller input signal and may respond independently of the adjacent portions. The central computing unit may be responsible for activating each add-on section 9a, 9b, ..., 9e.

Embodiments of the present invention provide a combination of blade pitch control and active add-on control allowing them to respond to different signals and frequencies.

According to an embodiment of the present invention, the active aerodynamic add-on controller may respond to the floating platform signals and wind turbine signal. The active add-on may respond faster than the blade pitch controller. Only the parts of the blade that have activated add-ons may be affected, while the rest of the rotor blade may remain unaffected and continue to stay in a prescribed blade pitch angle. Control of blade aerodynamic response can be fine-tuned to be as minimal or aggressive as necessary, making it much more versatile than blade pitch control alone. The blade pitch controller may respond to wind turbine signals, in particular wind turbine operational parameters.

Embodiments of the present invention may allow to maintain pitch bearing design as conventional also in onshore wind turbines. Embodiments of the present invention may for example achieve to reduce the load on the blade pitch control and the blade pitch bearings. Add-ons or add-on portions may be place a different isolated locations along the blade span. Thereby, targeted control strategies to provide localized regulation of the aerodynamic lift is enabled. The add-ons or add-on portions may be made as wide/as long as the project demands or the application demands. The response time for actuating the active add-ons may be faster than the response time of the pitching system. The blade pitch control may typically be around 3° per second, but the active add-on may response nearly instantaneously to alter the pressure distribution around an airfoil.

Embodiments of the present invention, in particular the active add-on controller, may be configured to decrease loads on floating wind turbine components and/or may be adapted for tuning the damping required in a floating system to avoid negative feedback cycles. In particular, the active add-on control system may be utilized to adopt an active damping system and it may respond to different sea-states and wind speed to mitigate damage caused by illusive and sudden rough wave events.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling an offshore wind turbine (50) installed on a floating platform (12) and having at least one rotor blade (6) comprising at least one adaptable flow regulating device (9) configured to adapt/modulate an air flow exposed profile, the method comprising:
receiving a load related signal (3, 14) indicative of a load due to a movement of the floating platform (12); and
controlling the adaptable flow regulating device (9) based on the load related signal (3, 14).

2. Method according to the preceding claim, wherein the load related signal (3, 14) comprises information regarding at least one of:
a translational and/or rotational velocity of the floating platform (12) and/or a nacelle (51) of the wind turbine and/or a rotor (52) of the wind turbine, in particular 6-DOF information;
a translational and/or rotational acceleration of the floating platform and/or the nacelle and/or a rotor of the wind turbine, in particular 6-DOF information;
a load on at least one mooring line connecting the floating platform to the sea ground;
an interface moment between a wind turbine tower and a base foundation at the floating platform;
at least one load experienced on any component of the floating platform and/or of the wind turbine.

3. Method according to one of the preceding claims, further comprising:
filtering the received load related signal (3), in particular using a first band-pass filter, in order to obtain a filtered load related signal (14),
wherein controlling the adaptable flow regulating device is based on the filtered load related signal.

4. Method according to one of the preceding claims, wherein controlling the adaptable flow regulating device is performed using a first controller (13), in particular PID controller, receiving the filtered load related signal (14) and outputting a flow regulating device control signal (4) to an actuator (5).

5. Method according to one of the preceding claims, wherein the adaptable flow regulating device (9) comprises plural adaptable flow regulating device portions (9a,b,c,d,e) affecting different regions of the rotor blade (6), the adaptable flow regulating device portions in particular being arranged at different positions along a longitudinal axis (7) of the rotor blade,
wherein controlling the adaptable flow regulating device (9) based on the load related signal comprises controlling at least one adaptable flow regulating device portion independently from other adaptable flow regulating device portions based on the load related signal (3, 14).

6. Method according to one of the preceding claims, wherein the controlling the adaptable flow regulating device (9) is such as to achieve at least one of:
aerodynamic damping and/or counteracting of at least one acceleration and/or oscillation and/or rolling motion of the platform (12) and/or the nacelle (51);
mitigating at least one load;
mitigating floating platform fore-aft and/or side-side rotational and/or translational acceleration;
selectively decreasing load on certain blade sections;
changing pressure distribution around and/or across the airfoil of the rotor blade;
a damping response to fluctuations in wind speed;
a damping response to sea wave motion.

7. Method according to one of the preceding claims, wherein the rotor blade is adjustable regarding a pitch angle using a pitching system (11), the method further comprising:
receiving a wind turbine operation related signal (18, 23); and
controlling the pitching system based on the wind turbine operation related signal.

8. Method according to one of the preceding claims, the method further comprising:
controlling the adaptable flow regulating device (9) further based on the wind turbine operation related signal (18), at least based on information regarding rotor speed and/or wind speed,
in particular such that as to avoid exceeding a pitch system capability.

9. Method according to one of the preceding claims, wherein the wind turbine operation related signal (18) is indicative of at least one of:
a rotational speed of a rotor at which the rotor blade is mounted;
a blade pitch angle;
a wind speed;
a tower-foundation moment;
a blade root moment;
translational and/or rotational velocity of the wind turbine and/or the nacelle and/or the rotor, in particular 6-DOF information;
translational and/or rotational acceleration of the wind turbine and/or the nacelle and/or the rotor, in particular 6-DOF information.

10. Method according to one of the preceding claims, further comprising:
filtering the received wind turbine operation related signal (18), in particular using a second band-pass filter, in order to obtain a filtered wind turbine operation related signal (23),
wherein controlling the pitch system is based on the filtered wind turbine operation related signal.

11. Method according to one of the preceding claims, wherein controlling the pitch system is performed using a second controller (20), in particular PID controller, receiving the filtered wind turbine operation related signal (23) and outputting a pitch system control signal (22).

12. Method according to one of the preceding claims, wherein the adaptable flow regulating device comprises at least one of:
at least one surface member (9a,b,c,d,e) changeable in position and/or orientation relative to a main airfoil of the rotor blade, in particular configured to retract or extend a leading edge and/or a trailing edge;
an adaptable spoiler, in particular having plural spoiler portions arranged at a suction surface of the rotor blade, in particular close to or at a trailing edge of the rotor blade;
an adaptable flap installed close to or at a blade tip end;
an airfoil morphing system;
an aileron;

13. Method according to one of the preceding claims, wherein the adaptable flow regulating device comprises at least one of:
an inflatable bag configured to change position and/or orientation of a surface member upon inflation or deflation; and
a pneumatic system arranged to selectively inflate or deflate the bag.

14. Arrangement (1) for controlling an offshore wind turbine (50) installed at a floating platform (12) and having at least one rotor blade (6) comprising at least one adaptable flow regulating device (9) configured to adapt/modulate an air flow exposed profile, the arrangement comprising:
a controller (2) adapted:
to receive a load related signal (3, 14) indicative of a load due to a movement of the floating platform (12); and
to control the adaptable flow regulating device (9) based on the load related signal (3, 14).

15. Offshore wind turbine system (60), comprising:
an offshore floating platform (12);
a wind turbine (50) installed at the offshore floating platform (12) and having at least one rotor blade (6) comprising at least one adaptable flow regulating device (9) configured to adapt/modulate an air flow exposed profile; and
an arrangement (1) according to the preceding claim communicatively coupled to the flow regulating device.
